Europäisches Patentamt

European Patent Office

Office européen des brevets

(19)

(11) Veröffentlichungsnummer : **0 144 677**
**B1**

(12) **EUROPÄISCHE PATENTSCHRIFT**

(45) Veröffentlichungstag der Patentschrift :
06.05.87

(21) Anmeldenummer : **84112797.0**

(22) Anmeldetag : **24.10.84**

(51) Int. Cl.⁴ : **B 65 G 47/91, H 01 H 35/34**

(54) **Pneumatikbauteil für einen Vakuum-Saugkopf oder eine Vakuum-Saugdüse.**

(30) Priorität : **17.11.83 DE 3341445**

(43) Veröffentlichungstag der Anmeldung :
**19.06.85 Patentblatt 85/25**

(45) Bekanntmachung des Hinweises auf die Patenterteilung : **06.05.87 Patentblatt 87/19**

(84) Benannte Vertragsstaaten :
**AT CH LI NL**

(56) Entgegenhaltungen :
**US-A- 2 841 667**
**US-A- 3 227 837**
**Katalog "Festo Pneumatik" Ausgabe 1980 der Fa. Festo KG**

(73) Patentinhaber : **Preh Industrieausrüstungen GmbH**
**Schweinfurter Strasse 5 Postfach 1740**
**D-8740 Bad Neustadt/Saale (DE)**

(72) Erfinder : **Hergenhan, Oswin**
**Eyershausen 30**
**D-8742 Bad Königshofen (DE)**

EP 0 144 677 B1

**Beschreibung**

Die Erfindung betrifft ein Pneumatikbauteil für einen Vakuum-Saugkopf oder eine Vakuum-Saugdüse, in dessen Druckluftleitung eine Venturidüse angeordnet ist, deren Unterdruckseite in eine Unterdruckkammer mündet, an welcher eine Saugöffnung ausgebildet ist.

Ein derartiges Pneumatikbauteil ist als Vakuum-Saugdüse bzw. Vakuum-Saugkopf z. B. aus dem Katalog « FESTO PNEUMATIC », Ausgabe 1980 der Fa. Festo KG, D-7300 Esslingen bekannt. Mit diesem Bauteil lassen sich Körper an der Saugöffnung festhalten. Bei der bekannten Saugdüse besteht keine Möglichkeit schaltungstechnisch verwertbar festzustellen, ob ein Körper an der Saugöffnung steht oder nicht. Dies ist insbesondere dann ungünstig, wenn die Saugöffnung an einer schwer zugänglichen bzw. schwer einsehbaren Stelle einer Vorrichtung liegt. Durch Fotozellen oder andere Sensoren könnte zwar das Vorhanden- oder Nichtvorhandensein eines Körpers and der Saugöffnung erfaßt werden. Jedoch ist dies aufwendig und nicht an allen Stellen möglich.

Die US-A-28 41 667 und US-A-32 27 837 beschreiben jeweils ein Pneumatikbauteil, das abhängig vom Verhalten des Strömungsmediums selbst elektrische Schaltvorgänge auslöst, d. h. es ist als Strömungswächter vorgesehen. Beiden Ausführungen fehlen Saug- oder Drucköffnungen, die für Vorgänge außerhalb der Pneumatikbauteile nutzbar wären.

Aufgabe der Erfindung ist es, ein Pneumatikbauteil des eingangs genannten Art so auszulegen, daß es das Vorhandensein oder Nichtvorhandensein eines Körpers an der Saugöffnung erfaßt.

Erfindungsgemäß ist obige Aufgabe bei einem Bauteil der eingangs genannten Art dadurch gelöst, daß eine Seite der Unterdruckkammer mit einer Membran abgeschlossen ist, an deren der Unterdruckkammer abgewandten Seite der Luftdruck der Umgebung herrscht, und daß an der Membran ein Schaltstößel als Schaltkontakt angeordnet ist. Solange kein Körper an der Saugöffnung anliegt, ist diese offen, so daß beiderseits der Membran der gleiche Druck herrscht. Tritt ein Körper vor die Saugöffnung, dann wird diese geschlossen und der in der Venturidüse entstehende Unterdruck wirkt auf den Körper und die Membran. Die Membran springt um, wobei sie den Schaltstößel mitnimmt, der einen Schaltkontakt betätigt. Die Betätigung des Schaltkontakts ist damit das Anzeichen für das Vorhandensein eines Körpers an der Saugöffnung. Sie läßt sich in verschiedener Weise auswerten. Der Schaltkontakt kann ein elektrischer Schaltkontakt, oder ein pneumatischer oder hydraulischer Schaltkontakt sein.

Es ist nicht notwendig, daß der Unterdruck so groß ist, daß er den Körper an der Saugöffnung festhält. Der Körper kann auch an der Saugöffnung vorbeiwandern, wobei dann jeder vorbeiwandernde Körper einen Schaltimpuls auslöst.

Wenn Körper an schwer zugänglichen Stellen zu erfassen sind, muß dort nicht das Bauteil installiert werden. Es genügt, die Saugöffnung an der schwer zugänglichen Stelle vorzusehen. Die Erfassung eines Körpers bringt dabei keinen zusätzlichen Platzbedarf an der schwer zugänglichen Stelle mit sich. Es ist auch der Montageaufwand verringert. Das Bauteil eignet sich auch zur Erfassung von Körpern in Arbeitsbereichen, die unter Hitzeeinwirkung oder Kälteeinwirkung stehen.

Die Funktion des Bauteils ist unabhängig von dem Material des zu erfassenden Körpers. Es lassen sich durchsichtige Körper, undurchsichtige Körper, oder Körper aus Metall oder Kunststoff erfassen.

Vorteilhafte Ausgestaltungen der Erfindung ergeben sich aus der folgenden Beschreibung eines Ausführungsbeispiels und den Unteransprüchen. In der Zeichnung zeigen :

Figur 1 einen Schnitt eines Pneumatikbauteils,

Figur 2 eine Draufsicht des Pneumatikbauteils nach Figur 1,

Figuren 3 und 4 die beiden Teile einer Venturidüse im Schnitt, gegenüber Figur 2 vergrößert.

Ein Pneumatikschalter weist zwei Grundkörper 1 und 2 auf. Zwischen die beiden Grundkörper 1 und 2 ist eine Membran 3 eingespannt. Einerseits der Membran 3 besteht eine Unterdruckkammer 4. An der anderen Seite der Membran 3 ist eine Kammer 5 ausgebildet, in der über Öffnungen 6 der Luftdruck der Umgebung herrscht.

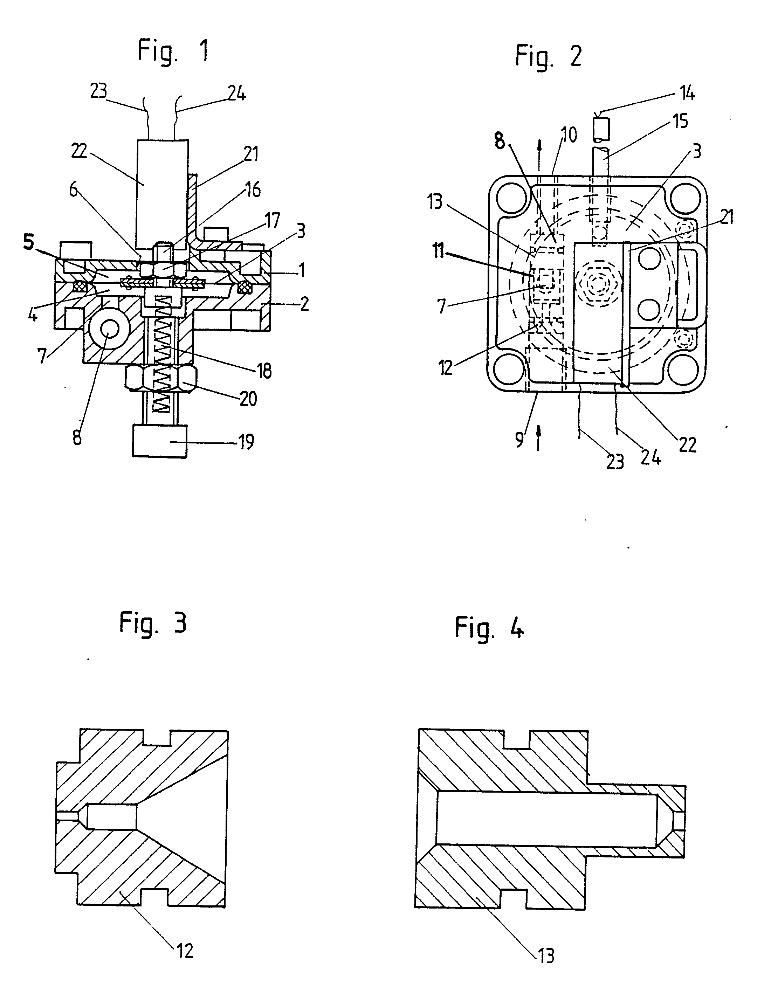

Die Unterdruckkamer 4 mündet über eine Bohrung 7 in einen Rohrraum 8, der an einer Anschlußöffnung 9 und an einer Auslaßöffnung 10 offen ist. In den Rohrraum 8 ist eine Venturidüse 11 eingesetzt, die aus einem ersten Düsenteil 12 und einem zweiten Düsenteil 13 besteht (Fig. 2, 3, 4). Die Unterdruckzone der Venturidüse 11 liegt bei der Bohrung 7.

An der Unterdruckkammer 4 ist eine Saugöffnung 14 ausgebildet. Diese ist im Beispielsfalle mittels eines Rohrstückes 15 an eine von den Grundkörpern 1 und 2 entfernte Stelle gelegt.

Im Zentrum der Membran 3 ist ein Schaltstößel 16 mittels einer Mutter 17 befestigt. An der einen Seite ist der Schaltstößel 16 von einer Druckfeder 18 belastet, deren Druck mittels einer Verstellschraube 19 einstellbar ist. Eine Mutter 20 dient der Feststellung der Verstellschraube 19.

An dem Grundkörper 2 ist ein Haltewinkel 21 befestigt, an dem ein elektrischer Schaltkontakt 22 angeordnet ist. Dieser steht dem freien Ende des Schaltstößels 16 gegenüber. Die elektrischen Leitungen des Schaltkontakts 22 sind mit 23 und 24 bezeichnet.

Die Arbeitsweise des Beschriebenen Pneumatikbauteils ist etwa folgende :

Wird die Anschlußöffnung 9 mit Druckluft beaufschlagt, dann ereignet sich nichts, solange die Saugöffnung 14 offen ist. Denn an der Saugöffnung 14 und an den Öffnungen 6 steht der gleiche Druck, so daß die Membran 3 trotz der angelegen Druckluft in ihrer Ruhestellung verbleibt.

Verschließt ein Körper die Saugöffnung 14, dann baut sich über die Bohrung 7 in der Unterdruckkammer 4 ein Unterdruck auf. Dieser führt zu einer Auslenkung der Membran 3 gegen die Kraft der Druckfeder 18. Dadurch wird der Schaltstößel 16 verschoben und der elektrische Kontakt 22 je nach seiner Anordnung geöffnet oder geschlossen. Dieses Schaltsignal läßt sich über die Leitungen 23 und 24 weiter auswerten. Beispielsweise kann durch das Schaltsignal ein Zähler oder eine akustische oder optische Anzeige geschaltet werden.

Verläßt der Körper die Saugöffnung 14 wieder, dann stellt sich die Membran 3 unter der Wirkung der Druckfeder 18 zurück. Gleichzeitig schaltet der elektrische Schaltkontakt 22 zurück.

Werden von dem Pneumatikschalter Kleinteile erfaßt, die an der Saugöffnung 14 durch den Saugdruck so gehalten sind, daß sie sich nicht selbständig lösen können, dann wird zum Lösen solcher Teile die Druckluftuzufuhr agbeschaltet.

Durch die Erfindung ist also erreicht, daß das Anliegen eines Körpers an der Saugöffnung 14 ein weiterverwertbares Schaltsignal erzeugt, ohne daß an der Erfassungsstelle weitere Schalmittel angeordnet werden müssen.

Anstelle des Rohrstücks kann auch ein Schlauchstück vorgesehen sein, das an die Erfassungsstelle geführt ist. Es ist auch möglich, die Saugöffnung 14 an einer Bohrung einer Einrichtung vorzusehen, wobei die Bohrung einerseits an der Erfassungsstelle endet und andererseits mit der Unterdruckkammer verbunden ist.


## Patentansprüche

1. Pneumatikbauteil für einen Vakuum-Saugkopf oder eine Vakuum-Saugdüse, in dessen Druckluftleitung eine Venturidüse (11) angeordnet ist, deren Unterdruckseite in eine Unterdruckkammer (4) mündet, an welcher eine Saugöffnung (14) ausgebildet ist, dadurch gekennzeichnet, daß eine Seite der Unterdruckkammer (4) mit einer Membran (3) abgeschlossen ist an deren der Unterdruckkammer (4) abgewandten Seite über eine Öffnung (6) der Luftdruck der Umgebung herrscht, und daß an der Membran (3) ein Schaltstößel (16) eines Schaltkontakts (22) angeordnet ist.

2. Pneumatikbauteil nach Anspruch 1, dadurch gekennzeichnet, daß die Venturidüse (11) von zwei Düsenteilen (12, 13) gebildet ist, die in einem Rohrraum (8) beabstandet angeordnet sind, und daß die zwischen den beiden Düsenteilen (12, 13) liegende Unterdruckzone über eine Bohrung (7) mit der Unterdruckkammer (4) verbunden ist.

3. Pneumatikbauteil nach Anspruch 1 oder 2, dadurch gekennzeichnet, daß die Saugöffnung (14) beabstandet von der Unterdruckkammer (4) an einem Rohr- oder Schlauchstück bzw. an einer Bohrung ausgebildet ist, das bzw. die an einer Erfassungsstelle endet.

4. Pneumatikbauteil nach einem der vorhergehenden Ansprüche, dadurch gekennzeichnet, daß die Membran (3) von einer Druckfeder (18) belastet ist, die dem Unterdruck entgegenwirkt.


## Claims

1. The pneumatic part for a vacuum suction basket or a vacuum suction nozzle, the compressed-air piping of which is provided with a Venturi tube (11), the low pressure side of which leads to a low pressure chamber (4) with an aspirating hole (14), is characterized in that one side of the low pressure chamber (4) is closed by a membrane (3), the air-pressure of the environment prevailing on the side opposite to the low pressure chamber (4) over an opening (6), and in that a suction ram (16) of a switching contact (22) is attached to the membrane.

2. The pneumatic part according to claim 1, is characterized in that the Venturi tube is made up of two parts (12, 13), which are spaced in a pipe, and in that the low pressure area between the two parts (12, 13) is linked with the low pressure chamber (4) over a bore (7).

3. The pneumatic part according to claim 1 oder 2, is characterized in that the suction opening (14) distanced from the low pressure chamber (4) is applied on a pipe or hose or resp. a bore which terminates at a clutch.

4. The pneumatic part according to the preceding claims is characterized in that the membrane (3) is loaded by a pressure spring (18) which reacts against the low pressure.


## Revendications

1. Elément pneumatique pour une tête aspirante ou une tuyère d'aspiration, dans la conduite d'air comprimé de laquelle est disposé un tube de Venturi (11) dont le côté de dépression aboutit dans une chambre de dépression (4) dans laquelle se trouve une ouïe d'aspiration (4), caractérisé en ce qu'un côté de ladite chambre de dépression (4) est isolé par une membrane (3), au côté extérieur de ladite chambre de dépression (4) de laquelle la pression d'air ambiante règne par une ouverture (6), et en ce qu'un poussoir de commande (16) d'un contact de commutation de commande (22) est disposé sur ladite membrane (3).

2. Elément pneumatique selon la revendication 1, caractérisé en ce que ledit tube de Venturi (11) est composé de deux pièces de tuyère (12, 13) disposées avec un espacement à l'intérieur d'un espace tubulaire (8), et en ce que la zone de dépression se trouvant entre les deux pièces de tuyère (12, 13) est reliée à ladite chambre de dépression (4) par un vide de forure (7).

3. Elément pneumatique selon la revendication 1 ou 2, caractérisé en ce que ladite ouïe d'aspiration (14) est formée, avec un espacement par rapport à ladite chambre de dépression (4), sur un morceau de tube ou de tuyau flexible, ou alors sur un vide de forure, aboutissant à une pièce de montage.

4. Elément pneumatique selon une des revendications précédentes, caractérisé en ce que ladite membrane (3) est chargée par un ressort à pression (18) agissant de façon antidépressive.

4

## Fig. 1

## Fig. 2

## Fig. 3

## Fig. 4